# FASCICULE DE BREVET EUROPEEN

(11) **EP 4 540 105 B1**
(45) Date de publication et mention de la délivrance du brevet: **29.07.2026**
(21) Numéro de dépôt: 23734011.2
(22) Date de dépôt: 02.06.2023
(51) Int. Cl.: B60R 19/48, G01S 13/931

(54) **DISPOSITIF DE FIXATION D'UN RADAR SUR UN PARE-CHOCS SUPPRIMANT LES PERTURBATIONS DES ONDES RADAR**
VORRICHTUNG ZUR BEFESTIGUNG EINES RADARS AN EINEM STOSSFÄNGER UNTER BESEITIGUNG VON RADARWELLENINTERFERENZ
DEVICE FOR SECURING A RADAR TO A BUMPER, ELIMINATING RADAR WAVE INTERFERENCE

(30) Priorité: 16.06.2022 FR 2205872
(43) Date de publication de la demande: 23.04.2025
(73) Titulaire: Stellantis Auto SAS, 78300 Poissy (FR)
(72) Inventeur: PERON, Rodolphe, 95220 HERBLAY SUR SEINE (FR); BOUDAN, Julien, 91210 DRAVEIL (FR); ROYER, Guillaume, 91680 BRUYERES LE CHATEL (FR)
(74) Mandataire: BCIP
(86) Numéro de dépôt international: PCT/FR2023/050779
(87) Numéro de publication internationale: WO 2023/242493

(56) Documents cités:
- DE-A1- 102020 132 395
- KR-A- 20130 098 814
- KR-A- 20200 044 301

## Description

Le domaine technique concerne les dispositifs de fixation d'un radar sur un pare-chocs, les assemblages comprenant un tel dispositif de fixation ainsi que les véhicules équipés de tels assemblages.

Les véhicules récents sont très largement équipés de systèmes d'assistance à la conduite qui connaissent un développement rapide. Ces systèmes d'assistance sont très variés et sont capables d'effectuer des tâches de plus en plus complexes, visant à aboutir à une conduite entièrement autonome du véhicule. La plupart des systèmes d'assistance font intervenir des radars frontaux, spécifiquement dédiés à un système d'assistance, si bien qu'un pare-chocs avant de véhicule peut être équipés de plusieurs radars. Actuellement les radars frontaux sont directement fixés sur le pare-chocs via des vis en matériaux tendre, car les vis métalliques perturbent les ondes émises par le radar. Les perturbations sont d'autant plus importantes que les vis de fixation sont généralement rattachées directement au boîtier du radar.

Une telle méthode de fixation d'un radar sur un pare-chocs nécessite de démouler des fûts de fixation, ménagés sur le pare-chocs, pour recevoir les vis de fixation, ce qui s'avère parfois impossible compte tenu de la complexité du pare-chocs.

Par ailleurs, la grande majorité des radars disponibles comportent des pattes de vissage directement ménagées sur le boîtier du radar et il est difficilement envisageable, pour des raisons économiques et de gestion des stocks, de développer un radar présentant un boîtier spécifique afin de résoudre un problème de démoulage de pare-chocs trop complexe. Le document KR20200044301A montre un assemblage comportant un radar et un dispositif de fixation par vissage du radar sur un pare-chocs d'un véhicule automobile.

Ainsi, il existe un besoin d'une solution permettant de fixer un radar classique disposant de pattes de vissage, sur un pare-chocs complexe pour lequel il est difficile ou impossible de prévoir un fut de vissage adapté.

La présente invention a pour objet de pallier les problèmes exposés précédemment. Dans ce contexte technique, un but de la présente invention est de fournir un assemblage comportant un radar et un dispositif de fixation du radar sur un pare-chocs d'un véhicule automobile avec les caractéristiques de la revendication 1.

A cet effet, la présente invention se rapporte à un dispositif de fixation d'un radar sur un pare-chocs d'un véhicule automobile, le dispositif étant conformé pour la fixation d'un radar du type présentant au moins une patte de vissage conçue pour recevoir une vis de fixation, le dispositif comportant une zone de réception pour recevoir le radar et des moyens d'indexation, les moyens d'indexation étant dépourvus de vis et conçus pour coopérer avec au moins une patte de vissage du radar pour assurer l'indexation du radar dans la zone de réception, le dispositif comportant en outre des moyens de placage conçus pour plaquer le radar dans la zone de réception pour en assurer sa fixation, lorsque le radar est indexé dans la zone de réception, les moyens de placage s'étendant au moins en travers de la zone de réception.

L'invention concerne également un véhicule comportant au moins un assemblage selon l'invention.

Ainsi, le dispositif selon l'invention permet de fixer un radar, présentant au moins une patte de vissage sur un pare-chocs pour former un assemblage selon l'invention, sans nécessiter un vissage des pattes de vissage du radar. Les moyens d'indexation du dispositif selon l'invention mettent à profit au moins une patte de vissage afin d'indexer le radar dans la zone de réception tandis que les moyens de placage assurent la fixation du radar dans la zone de réception du dispositif en s'étendant en travers de la zone de réception, prenant en sandwich le radar entre la zone de réception et les moyens de placage. Ainsi, un radar classique présentant des pattes de vissage peut être fixé sur un pare-chocs en s'affranchissant du besoin de fut de vissage à proximité du radar. Une vis métallique peut être utilisée si besoin pour maintenir les moyens de placage, la vis métallique étant disposée à distance du radar.

Selon un mode de réalisation de l'invention, les moyens d'indexation comportent au moins un pion de centrage conformé pour être inséré au moins en partie dans un orifice de réception d'une vis ménagé dans une patte de vissage du radar.

Selon une possibilité, les moyens d'indexation comportent au moins une encoche, chacune dimensionnée pour accueillir une patte de vissage du radar.

Dans un mode de réalisation, les moyens de placage comportent au moins un capot arrière conçu pour s'étendre de part et d'autre de la zone de réception, lorsque le radar est plaqué dans la zone de réception.

Avantageusement, le capot arrière présente des moyens formant charnière pour assurer l'articulation et la fixation du capot arrière.

Avantageusement encore, les moyens formant charnière comportent au moins une nervure d'interfaçage, chacune conçue pour être insérée dans une fente d'interfaçage.

Selon une possibilité, la zone de réception et/ou les moyens d'indexation viennent de matière avec le pare-chocs.

Selon un mode de réalisation, le dispositif est réalisé en matière plastique. L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de face d'un assemblage selon l'invention sur un pare-chocs d'un véhicule selon l'invention, dans laquelle le capot arrière a été enlevé ;
[Fig. 2] la figure 2, représente une vue en perspective d'un radar accueilli dans la zone de réception d'un dispositif selon l'invention avec un capot en cours de mise en place ;
[Fig. 3] la figure 3, représente une vue en perspective d'un dispositif selon l'invention.

Dans ces figures, les mêmes références sont utilisées pour désigner les mêmes éléments.

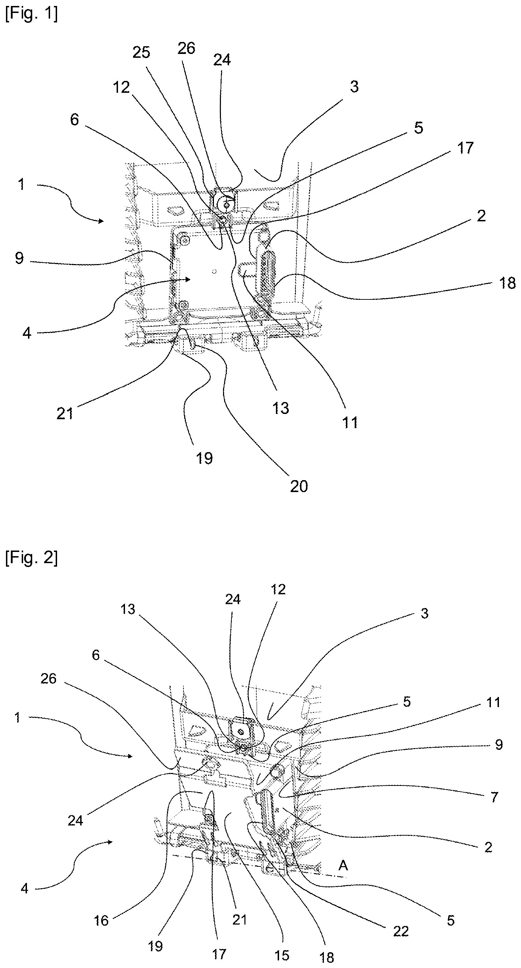

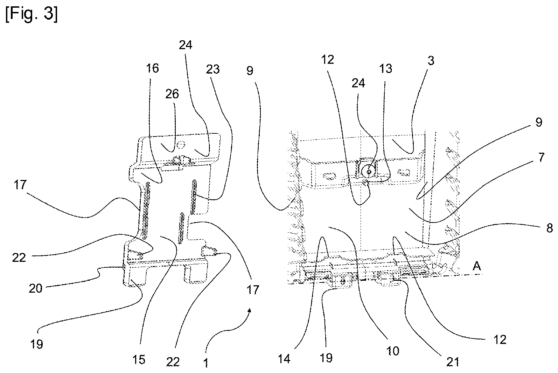

Un dispositif 1 de fixation selon l'invention, illustré sur la figure 3, permet la fixation d'un radar 2, illustré en particulier sur la figure 2, sur un pare-chocs 3 d'un véhicule automobile en formant un assemblage 4 selon l'invention, illustré sur les figures 1 et 2.

Afin de ne pas perturber les ondes susceptibles d'être émises par le radar 2, le dispositif 1 est réalisé en matière plastique.

Le radar 2 est du type présentant au moins une patte de vissage 5, illustrée sur la figure 2, conçue pour recevoir une vis de fixation, non illustrée sur les figures. La patte de vissage 5 présente, à cet effet, un orifice 6 de réception d'une vis de fixation du radar 2.

Le dispositif 1 comporte une zone de réception 7 conçue pour recevoir le radar 2. Comme illustrée sur la figure 3, la zone de réception 7 forme un logement 8, bordé par des rebords 9, de forme globalement parallélépipédique dont les dimensions sont adaptées pour accueillir le radar 2. La zone de réception 7 comporte également une paroi 10 transparente aux ondes susceptibles d'être émises par le radar 2. Le radar 2 présente classiquement une face active (non illustrée), émettant et réceptionnant des ondes radar, et une face arrière 11 (illustrée sur les figures 1 et 2) opposée à la face active. La zone de réception 7 est conçue pour que la face active du radar 2 soit disposée en regard de la paroi 10.

Le dispositif 1 de fixation comporte également des moyens d'indexation 12, dépourvus de vis, conçus pour coopérer avec au moins une patte de vissage 5 du radar 2 pour assurer l'indexation du radar 2 dans la zone de réception 7. Comme illustré sur la figure 3, les moyens d'indexation 12 comportent au moins un pion de centrage 13 conformé pour être inséré au moins en partie dans l'orifice 6 de réception d'une vis du radar 2.

Les moyens d'indexation 12 comportent également au moins une encoche 14, en l'occurrence deux encoches 14 illustrées sur la figure 3, chacune dimensionnée pour accueillir une patte de vissage 5 du radar 2, comme illustré sur la figure 1. Avantageusement, la zone de réception 7 et les moyens d'indexation 12 viennent de matière avec le pare-chocs 3, la paroi 10 étant ménagée sur une face interne du pare-chocs 3 invisible de l'extérieur du véhicule.

Le dispositif 1 comporte en outre des moyens de placage 15 conçus pour plaquer le radar 2 dans la zone de réception 7 du dispositif 1 pour en assurer sa fixation, lorsque le radar 2 est indexé dans la zone de réception 7, les moyens de placage 15 s'étendant au moins en travers de la zone de réception 7.

Dans le mode de réalisation illustré sur les figures, les moyens de placage 15 comportent au moins un capot arrière 16 conçu pour s'étendre de part et d'autre de la zone de réception 7, lorsque le radar 2 est plaqué dans la zone de réception 7.

Comme illustré sur la figure 3, le capot arrière 16 comporte, par exemple, des découpes 17 permettant le passage d'éléments de connectique 18 faisant saillie de la face arrière 11 du radar 2.

Afin de positionner le capot arrière 16 pour assurer le placage du radar 2 dans la zone de réception 7, ce dernier est pourvu de moyens formant charnière 19 pour assurer l'articulation et la fixation du capot arrière 16, comme illustré sur la figure 2. A cet effet, les moyens formant charnière 19 comportent au moins une nervure d'interfaçage 20, en l'occurrence deux nervures d'interfaçage 20 illustrées sur la figure 2, chacune étant conçue pour être insérée dans une fente d'interfaçage 21 des rebords 9 entourant la zone de réception 7. Comme illustré sur la figure 2, les nervures d'interfaçage 20 sont insérées dans les fentes d'interfaçage 21 puis le capot arrière 16 est mis en rotation autour d'un axe de rotation A, illustré sur la figure 2, passant par les nervures d'interfaçage 20. La rotation du capot arrière 16 amène le capot arrière 16 en appui contre la face arrière 11 du radar 2 afin de plaquer le radar 2 dans la zone de réception 7. Afin de faciliter le placage du radar 2 par les moyens de placage 15, le capot arrière 16 comporte des nervures d'appui 22, illustrées sur la figure 3, conçues pour exercer une pression sur au moins une patte de vissage 5 du radar 2 lorsque le radar 2 est indexé et plaqué dans la zone de réception 7. Comme illustré sur la figure 2, le pion de centrage 13 est inséré dans une patte de vissage 5 du radar 2 tandis que des nervures d'appui 22 viennent en appui sur les autres pattes de vissage 5 lorsque le capot arrière 16 est mis en place.

Avantageusement, comme illustré sur la figure 3, le capot arrière 16 comporte des rainures 23 faisant saillie du capot arrière 16 de sorte à venir en appui sur la face arrière 11 du radar 2 lorsque le capot arrière 16 plaque le radar 2 dans la zone de réception 7.

Afin de maintenir le capot arrière 16 en position d'assurer un placage du radar 2, comme illustré sur la figure 2, ce dernier est muni de moyens de verrouillage 24 pour permettre de solidariser le capot arrière 16 avec le reste du dispositif 1, en l'occurrence le pare-chocs 3. Ces moyens de verrouillage 24 comportent par exemple, une vis de fixation 25 vissable sur le capot arrière 16 à l'extrémité d'une patte de maintien 26. La position de la vis de fixation 25 est choisie afin de limiter les perturbations des ondes émises par le radar 2. De façon alternative, non illustrée sur les figures, les moyens de verrouillage 24 comportent des moyens de clipsage du capot arrière 16 sur le reste du dispositif 1.

L'assemblage 4 est donc réalisé par le radar 2 indexé et plaqué dans la zone de réception 7 avec le capot arrière 16 fixé en appui sur la face arrière 11 du radar 2. Ainsi, le dispositif 1 selon l'invention permet de fixer le radar 2 sur le pare-chocs 3 en s'affranchissant de fut de vissage disposé en regard de chaque orifice 6 de réception. Le dispositif 1 permet donc de fixer un radar 2 quelle que soit la complexité du pare-chocs 3. Au besoin, une vis métallique peut être utilisée pour visser le capot arrière 16, la vis métallique étant alors à distance suffisante pour ne pas perturber les ondes susceptibles d'être émise par le radar 2.

L'invention ne se limite pas au mode de réalisation du dispositif de fixation décrit ci-avant, seulement à titre d'exemple, mais d'autres modes de réalisation peuvent être conçus par l'homme de métier sans sortir du cadre et de la portée de la présente invention.

## Revendications

1. Assemblage (4) comportant un radar (2) et un dispositif de fixation du radar (2) sur un pare-chocs (3) d'un véhicule automobile, le radar (2) présentant au moins une patte de vissage (5) conçue pour recevoir une vis de fixation, le dispositif (1) comportant une zone de réception (7) pour recevoir le radar (2) et des moyens d'indexation (12), les moyens d'indexation (12) étant dépourvus de vis et conçus pour coopérer avec au moins la patte de vissage (5) du radar (2) pour assurer l'indexation du radar (2) dans la zone de réception (7), le dispositif (1) comportant en outre des moyens de placage (15) conçus pour plaquer le radar (2) dans la zone de réception (7) pour en assurer sa fixation, lorsque le radar (2) est indexé dans la zone de réception (7), les moyens de placage (15) s'étendant au moins en travers de la zone de réception (7).

2. Assemblage (4) selon la revendication 1, **caractérisé en ce que** les moyens d'indexation (12) comportent au moins un pion de centrage (13) conformé pour être inséré au moins en partie dans un orifice (6) de réception d'une vis ménagé dans une patte de vissage (5) du radar (2).

3. Assemblage (4) selon la revendication 1 ou 2, **caractérisé en ce que** les moyens d'indexation (12) comportent au moins une encoche (14), chacune dimensionnée pour accueillir une patte de vissage (5) du radar (2).

4. Assemblage (4) selon l'une des revendications 1 à 3, **caractérisé en ce que** les moyens de placage (15) comportent au moins un capot arrière (16) conçu pour s'étendre de part et d'autre de la zone de réception (7), lorsque le radar (2) est plaqué dans la zone de réception (7).

5. Assemblage (4) selon la revendication 4, **caractérisé en ce que** le capot arrière (16) présente des moyens formant charnière (19) pour assurer l'articulation et la fixation du capot arrière (16).

6. Assemblage (4) selon la revendication 5, **caractérisé en ce que** les moyens formant charnière (19) comportent au moins une nervure d'interfaçage (20), chacune conçue pour être insérée dans une fente d'interfaçage (21).

7. Assemblage (4) selon l'une des revendications 1 à 6, **caractérisé en ce que** la zone de réception (7) et/ou les moyens d'indexation (12) viennent de matière avec le pare-chocs (3).

8. Assemblage (4) selon l'une des revendications 1 à 7, **caractérisé en ce qu'**il est réalisé en matière plastique.

9. Véhicule comportant au moins un assemblage (4) selon l'une quelconque des revendications précédentes.

## Patentansprüche

1. Baugruppe (4) mit einem Radar (2) und einer Vorrichtung zur Befestigung des Radars (2) an einem Stoßfänger (3) eines Kraftfahrzeuges, wobei das Radar (2) mindestens eine Schraublasche (5) zur Aufnahme einer Befestigungsschraube aufweist, wobei die Vorrichtung (1) einen Aufnahmebereich (7) zur Aufnahme des Radars (2) und Indexierungsmittel (12) aufweist, wobei die Indexierungsmittel (12) schraubenlos und zur Zusammenarbeit mit mindestens der Schraublasche (5) des Radars (2) ausgebildet sind, um sicherzustellen, dass Die Vorrichtung (1) umfasst ferner ein Plattierungsmittel (15), das das Radar (2) in dem Empfangsbereich (7) plattieren kann, um seine Befestigung zu gewährleisten, wenn das Radar (2) in dem Empfangsbereich (7) indiziert ist, wobei das Plattierungsmittel (15) sich zumindest über den Empfangsbereich (7) erstreckt.

2. Anordnung (4) nach Anspruch 1, **dadurch gekennzeichnet, dass** die Indexierungsmittel (12) mindestens einen Zentrierstift (13) aufweisen, der so ausgebildet ist, dass er zumindest teilweise in eine Schraubenaufnahmeöffnung (6) in einer Schraublasche (5) des Radars (2) eingesetzt werden kann.

3. Anordnung (4) nach Anspruch 1 oder 2, **dadurch gekennzeichnet, dass** die Indexierungsmittel (12) mindestens eine Kerbe (14) aufweisen, die jeweils so bemessen ist, dass sie eine Schraublasche (5) des Radars (2) aufnehmen.

4. Anordnung (4) nach einem der Ansprüche 1 bis 3, **dadurch gekennzeichnet, dass** die Plattierungsmittel (15) mindestens eine hintere Haube (16) aufweisen, die so ausgebildet ist, dass sie sich beiderseits des Aufnahmebereichs (7) erstreckt, wenn das Radar (2) in den Aufnahmebereich (7) plattiert ist.

5. Anordnung (4) nach Anspruch 4, **dadurch gekennzeichnet, dass** die hintere Haube (16) Scharniermittel (19) zur Anlenkung und Befestigung der hinteren Haube (16) aufweist.

6. Anordnung (4) nach Anspruch 5, **dadurch gekennzeichnet, dass** die Scharniermittel (19) mindestens eine Verbindungsrippe (20) aufweisen, die jeweils zum Einsetzen in einen Verbindungsschlitz (21) ausgebildet ist.

7. Baugruppe (4) nach einem der Ansprüche 1 bis 6, **dadurch gekennzeichnet, dass** der Aufnahmebereich (7) und/oder die Indexierungsmittel (12) einstückig mit dem Stoßfänger (3) ausgebildet sind.

8. Verbindung (4) nach einem der Ansprüche 1 bis 7, **dadurch gekennzeichnet, dass** sie aus Kunststoff hergestellt ist.

9. Fahrzeug mit mindestens einer Anordnung (4) nach einem der vorhergehenden Ansprüche.

## Claims

1. Assembly (4) comprising a radar (2) and a device for fixing the radar (2) to a bumper (3) of a motor vehicle, the radar (2) having at least one screwing lug (5) designed to receive a fixing screw, the device (1) comprising a goods in zone (7) for receiving the radar (2) and indexing means (12), the indexing means (12) being devoid of screws and designed to cooperate with at least the screwing lug (5) of the radar (2) to ensure the indexing of the radar (2) in the goods in zone (7), the device (1) further comprising positioning means (15) designed to place the radar (2) in the goods in zone (7) to ensure its fixing, when the radar (2) is indexed in the goods in zone (7), the positioning means for positioning) extending at least across the goods in zone (7).

2. Assembly (4) according to claim 1, wherein the indexing means (12) comprise at least one centring pin (13) shaped to be inserted at least partially into a receipt orifice (6) of a screw provided in a screwing lug (5) of the radar (2).

3. Assembly (4) according to Claim 1 or 2, **characterised in that** the indexing means (12) comprise at least one notch (14), each dimensioned to receive a screwing lug (5) of the radar (2).

4. Assembly (4) according to one of Claims 1 to 3, **characterised in that** the positioning means (15) comprise at least one rear cover (16) designed to extend on either side of the goods in zone (7), when the radar (2) is pressed in the goods in zone (7).

5. Assembly (4) according to claim 4, wherein the rear cap (16) has hinge means (19) for ensuring the articulation and the fixing of the rear cap (16).

6. Assembly (4) according to claim 5, **characterised in that** the hinge-forming means (19) comprise at least one interfacing rib (20), each designed to be inserted into an interfacing slot (21).

7. Assembly (4) according to one of claims 1 to 6, wherein the goods in zone (7) and/or the indexing means (12) are integral with the bumper (3).

8. Assembly (4) according to one of Claims 1 to 7, **characterised in that** it is realised of plastic material.

9. Vehicle comprising at least one assembly (4) according to any one of the previous claims.
